# EUROPEAN PATENT SPECIFICATION

(11) **EP 2 889 133 B1**
(45) Date of publication and mention of the grant of the patent: **28.03.2018**
(21) Application number: 13830619.6
(22) Date of filing: 22.08.2013
(51) Int. Cl.: B32B 5/26, D01F 8/06, D01F 8/14, D04H 1/593, D04H 3/16, B32B 5/08, B32B 7/04

(54) **NONWOVEN FABRIC LAMINATE**
VLIESSTOFFLAMINAT
STRATIFIÉ DE TISSU NON TISSÉ

(30) Priority: 22.08.2012 JP 2012183649
(43) Date of publication of application: 01.07.2015
(73) Proprietor: Mitsui Chemicals, Inc., Tokyo 105-7117 (JP)
(72) Inventor: ICHIKAWA, Taro, Sodegaura-shi Chiba 299-0265 (JP); KAWABE, Kuniaki, Sodegaura-shi Chiba 299-0265 (JP); IIBA, Kozo, Sodegaura-shi Chiba 299-0265 (JP); TSUDA, Takeshi, Sodegaura-shi Chiba 299-0265 (JP)
(74) Representative: Hoffmann Eitle
(86) International application number: PCT/JP2013/072421
(87) International publication number: WO 2014/030702

(56) References cited:
- WO-A1-00/22219
- JP-A- H09 209 254
- JP-A- H10 280 267
- JP-A- 2008 266 831
- JP-A- 2008 266 832

## Description

### TECHNICAL FIELD

The present invention relates to nonwoven fabric laminates which are sterilizable by treatments such as electron beam treatment and have excellent waterproofness, low-temperature sealing properties and flexibility.

### BACKGROUND ART

Polyethylene nonwoven fabrics outperform polypropylene nonwoven fabrics in flexibility, touch and heat sealing properties. In addition, polyethylene nonwoven fabrics have a small deterioration by the irradiation with, for example, electron beams and radiations. These properties make the polyethylene nonwoven fabrics suitable for use in medical gowns, absorbent products and materials for packaging, supporting and backing various articles.

However, polyethylene generally has low melt spinnability as compared to polypropylene. Consequently, it is difficult to obtain thin fibers by a spunbonding method or a meltblowing method, and polyethylene nonwoven fabrics obtained by such a method have poor formation. Because of this, the use of such nonwoven fabrics is limited to a very small range of applications. An approach to decreasing the fiber diameters of polyethylene fibers is to increase the spinning temperature. In this case, however, polyethylene may be partially crosslinked to cause gelation and thus fails to ensure excellent forming stability.

To remedy these defects, a method has been proposed in which thin polyethylene fibers are obtained by spinning polyethylene fibers in parallel with high-melting fibers such as polyesters through a single spinneret (Patent Literature 1: JP-A-2003-506582). In this method, however, the forming of polyethylene and polyester entails respective devices and conditions. This complexity associated with the forming apparatus gives rise to the risk that continuous production may be instable. Further, composite nonwoven sheet materials obtained by such a method are meltblown nonwoven fabric layers composed of so-called side-by-side conjugate fibers in which the polyethylene and the polyester are attached to each other across the fibers. When a spunbond nonwoven fabric is stacked on this sheet material by embossing, the polyester moieties of the conjugate fibers which are exposed on the surface of the meltblown nonwoven fabric layer are poorly bonded to the spunbond nonwoven fabric. Consequently, insufficient fuzz resistance may be encountered at times.

To obtain meltblown polyethylene nonwoven fabrics having an average fiber diameter of not more than 5 µm, a method has been proposed which involves a resin composition including a polyethylene having a weight average molecular weight of 21, 000 to 45,000 and a melt flow rate of 15 to 250 g/10 min and a polyethylene wax having a weight average molecular weight of 6,000 to 12,000, in a weight ratio of 70/30 to 30/70 (Patent Literature 2: Japanese Patent No. 3995885). When, however, meltblown polyethylene nonwoven fabrics obtained by such a method are used in the form of single layers in medical gowns, absorbent products and materials for packaging, supporting and backing various articles, there is a risk that insufficient strength, waterproofness and fuzz resistance may be encountered.

To improve the wear resistance and the fuzz resistance of the meltblown polyethylene nonwoven fabrics, Patent Literature 2 proposes that a polyethylene spunbond nonwoven fabric be stacked onto the resin composition including the polyethylene and the polyethylene wax having a weight average molecular weight of 6000 to 12000. However, polyethylene nonwoven fabric laminates obtained by such a method are not sufficiently improved in terms of waterproofness.
Patent Literature 3 describes a polyethylene nonwoven fabric that is produced by a meltblowing process using a resin composition comprising a polyethylene (A) and a polyethylene wax (B) having a softening point higher than 110°C. A nonwoven fabric laminate containing at least one layer comprising the polyethylene nonwoven fabric is described as having excellent softness, water impermeability and interlaminar bond properties. In particular, the laminate of a meltblown nonwoven fabric comprising the polyethylene nonwoven fabric and a spunbonded nonwoven fabric made up with a conjugate fiber comprising a propylene-based polymer (a) and an ethylene-based polymer (b) is described as providing good uniformity and excellent softness, gas permeability, water impermeability and interlaminar bond strength. The laminate is advantageously used as substrate materials for sanitary goods such as disposable diapers and for packaging materials Patent Literature 4 provides fibers and a sheet which can be used for various devices and release less dust from their surfaces. The fibers contain wax having a number-average molecular weight (Mn) of 500-7,500 as a main component; synthetic pulp constituted of the fibers; a dust-inhibiting material constituted of the fibers or the synthetic pulp; a synthetic sheet; and low dust paper.

### CITATION LIST

### PATENT LITERATURE

Patent Literature 1: JP-A-2003-506582
Patent Literature 2: Japanese Patent No. 3995885
Patent Literature 3: EP 1 039 007 A1
Patent Literature 4: JP 2008-266831 A

### SUMMARY OF INVENTION

### TECHNICAL PROBLEM

An object of the invention is to obtain nonwoven fabric laminates which may be hot embossed to maintain high wear resistance (fuzz resistance) without any decrease in waterproofness (barrier properties) and which have excellent tensile strength and flexibility.

### SOLUTION TO PROBLEM

The present invention provides a nonwoven fabric laminate including a meltblown nonwoven fabric (A) and a spunbond nonwoven fabric stacked on at least one surface of the meltblown nonwoven fabric, the meltblown nonwoven fabric including a fiber of an ethylene polymer resin composition containing an ethylene polymer (a) and an ethylene polymer wax (b) having a weight average molecular weight of less than 6,000 and a softening point exceeding 110°C, the spunbond nonwoven fabric including a fiber formed from an ethylene polymer (y), or from an ethylene polymer (y) and a polyester polymer (x).

### ADVANTAGEOUS EFFECTS OF INVENTION

The nonwoven fabric laminates of the present invention are excellent in flexibility, waterproofness (barrier properties; specifically, barrier properties to block the penetration of water, blood or an aqueous solution containing bacteria), wear resistance and tensile strength. Further, the nonwoven fabric laminates of the invention have excellent low-temperature sealing properties and are disinfectable or sterilizable by treatments such as with electron beams or gamma rays.

### DESCRIPTION OF EMBODIMENTS

### 〈Ethylene polymers (a)〉

The ethylene polymer (a) is one of the components of the ethylene polymer composition that forms the meltblown nonwoven fabric (A) constituting the nonwoven fabric laminate of the invention. The ethylene polymer may be an ethylene homopolymer or a copolymer of ethylene and another α-olefin, and is usually an ethylene-based polymer having a density in the range of 0.870 to 0.980 g/cm³, preferably 0.900 to 0.980 g/cm³, more preferably 0.920 to 0.975 g/cm³, and particularly preferably 0.940 to 0.970 g/cm³.

The ethylene polymer (a) in the invention is usually any of crystalline resins which are produced and sold as various products such as high-pressure low-density polyethylenes, linear low-density polyethylenes (so-called LLDPE), medium-density polyethylenes and high-density polyethylenes.

Examples of the α-olefins to be copolymerized with ethylene include α-olefins having 3 to 20 carbon atoms such as propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. The ethylene polymers may be used singly, or a mixture of two or more polymers may be used.

The use of an ethylene polymer having a density that is below the aforementioned range may result in a meltblown nonwoven fabric with poor durability, heat resistance, strength and aging stability. If, on the other hand, an ethylene polymer with a density exceeding the above range is used, the obtainable meltblown nonwoven fabric tends to exhibit poor heat sealing properties and flexibility.

In the invention, the density of the ethylene polymer (a) is a value obtained with respect to a strand obtained during the measurement of melt flow rate (MFR) at 190°C under 2.16 kg load. Specifically, the strand is heat treated at 120°C for 1 hour, gradually cooled to room temperature in 1 hour, and analyzed with a density gradient tube.

The ethylene polymer (a) in the invention is not particularly limited as long as a mixture of the polymer with the ethylene polymer wax (b) described later may be meltblown into a meltblown nonwoven fabric. From the viewpoints of small fiber diameters and spinnability, however, it is desirable that the MFR (measured under 2.16 kg load at 190°C in accordance with ASTM D 1238) be usually in the range of 10 to 250 g/10 min, preferably 20 to 200 g/10 min, and more preferably 50 to 150 g/10 min.

The ethylene polymer (a) in the invention may be any of polymers obtained by various known production methods such as high-pressure methods, and Ziegler-catalyzed or metallocene-catalyzed medium or low-pressure methods. In particular, metallocene-catalyzed ethylene polymers are advantageous in that the half crystallization time of the polymers is long and the water pressure resistance of the laminates may be increased.

### 〈Ethylene polymer waxes (b)〉

The ethylene polymer wax (b) is one of the components of the ethylene polymer composition that forms the meltblown nonwoven fabric (A) constituting the nonwoven fabric laminate of the invention. This wax has a weight average molecular weight (Mw) of less than 6,000, and preferably in the range of 1,000 to less than 6,000.

The ethylene polymer wax (b) in the invention has a lower molecular weight than the ethylene polymer (a), namely, is a wax-like polymer.

If an ethylene polymer wax having Mw exceeding the aforementioned range is used, the obtainable meltblown nonwoven fabric does not attain sufficiently small fiber diameters and consequently the improvement in waterproofness may be insufficient.

The ethylene polymer wax (b) in the invention has a softening point of above 110°C, and preferably 115°C or more as measured in accordance with JIS K2207. If the softening point is 110°C or below, the fibers tend to be fused when the obtainable meltblown nonwoven fabric is stacked together with a spunbond nonwoven fabric by hot embossing, resulting in poor waterproofness. The upper limit of the softening point is not particularly limited, but the softening point is usually not more than 145°C.

The ethylene polymer wax (b) in the invention may be any of ethylene homopolymers and copolymers of ethylene with α-olefins having 3 to 20 carbon atoms as long as the polymer wax satisfies the above weight average molecular weight and softening point. An ethylene homopolymer exhibits excellent kneadability with the ethylene polymer (a) and the obtainable composition shows excellent spinnability. The ethylene polymer waxes may be used singly, or a mixture of two or more waxes may be used.

The weight average molecular weight of the ethylene polymer wax (b) in the invention is a value obtained by GPC measurement under the following conditions. The weight average molecular weight was determined based on the following conversion method using a calibration curve drawn with commercial monodisperse polystyrene standards.

Apparatus: gel permeation chromatograph Alliance GPC2000 (manufactured by Waters)
Solvent: o-dichlorobenzene
Columns: TSKgel columns (manufactured by TOSO CORPORATION) × 4
Flow rate: 1.0 ml/min
Sample: 0.15 mg/mL o-dichlorobenzene solution
Temperature: 140°C
Molecular weight conversion: PE conversion/general calibration method

The general calibration calculation utilized the following coefficients in the Mark-Houwink viscosity equation.

Coefficients of polystyrene (PS) : KPS = 1.38 × 10⁻⁴, aPS = 0.70
Coefficients of polyethylene (PE) : KPE = 5.06 × 10⁻⁴, aPE = 0.70

The density of the ethylene polymer wax (b) in the invention as measured in accordance with JIS K6760 is not particularly limited, but is usually in the range of 0.890 to 0.980 g/cm³, preferably 0.910 to 0.980 g/cm³, more preferably 0.920 to 0.980 g/cm³, and particularly preferably 0.940 to 0.980 g/cm³. With the density in this range, the ethylene polymer wax (b) exhibits excellent kneadability with the ethylene polymer (a) and the obtainable composition shows excellent spinnability and aging stability. In addition, the obtainable meltblown nonwoven fabric may be advantageously stacked together with a spunbond nonwoven fabric by hot embossing with a low probability that the fibers will be fused.

The ethylene polymer wax (b) in the invention may be any of polymers produced by various methods without limitation such as usual polymerization of low-molecular weight polymers or thermal degradation of high-molecular weight ethylene polymers into lower molecular weights.

### 〈Ethylene polymer compositions〉

The ethylene polymer composition that forms the meltblown nonwoven fabric (A) in the invention includes the ethylene polymer (a) and the ethylene polymer wax (b). By containing the ethylene polymer wax (b), the ethylene polymer composition in the invention may form a meltblown nonwoven fabric with a small average fiber diameter. If the amount of the ethylene polymer wax (b) is small, the composition may fail to achieve a decrease in average fiber diameter. If, on the other hand, the amount of the ethylene polymer wax (b) is excessively large, the composition may be difficult to spin and may produce fibers with low strength. In view of these facts, the weight ratio (a)/(b) of the ethylene polymer (a) to the ethylene polymer wax (b) is preferably 20/80 to 80/20, and particularly preferably 30/70 to 70/30.

The half crystallization time of the ethylene polymer composition in the invention is usually not less than 87 seconds, preferably not less than 92 seconds, more preferably not less than 97 seconds, still more preferably not less than 102 seconds, particularly preferably not less than 107 seconds, and most preferably not less than 150 seconds. The upper limit of the half crystallization time of the ethylene polymer composition in the invention is not particularly limited.

The half crystallization time in the invention was measured by the following method. Approximately 5 mg of a sample was set on a differential scanning calorimeter (DSC7 manufactured by Perkin Elmer Co., Ltd.) and was completely melted by being allowed to stand at 200°C for 5 minutes. Thereafter, the sample was rapidly cooled to 115°C at a temperature decrease rate of 320°C/min and was thereby isothermally crystallized. The half crystallization time was obtained by determining the time from the start of the cooling until the crystallization heat reached 1/2 of the entire amount of heat.

The ethylene polymer composition satisfying the above half crystallization time may be obtained when at least one of the ethylene polymer (a) and the ethylene polymer wax (b) used to form the ethylene polymer composition is a metallocene-catalyzed polymer, although the results may be variable depending on the weight ratio of the ethylene polymer (a) to the ethylene polymer wax (b) in the ethylene polymer composition and the molecular weight of the ethylene polymer wax (b).

The production of the ethylene polymer composition in the invention may suitably involve known catalysts, for example, magnesium-supported titanium catalysts described in literatures such as JP-A-S57-63310, JP-A-S58-83006, JP-A-H03-706, Japanese Patent No. 3476793, JP-A-H04-218508 and JP-A-2003-105022, and metallocene catalysts described in WO 01/53369, WO 01/27124, JP-A-H03-193796 and JP-A-H02-41303.

The ethylene polymer composition in the invention preferably includes a transition metal compound. The composition including a transition metal compound may be obtained when at least one of the ethylene polymer (a) and the ethylene polymer wax (b) used to form the ethylene polymer composition is a metallocene-catalyzed polymer. Examples of the transition metal compounds include zirconium compounds, titanium compounds and hafnium compounds present in metallocene catalysts.

The total content of transition metals contained in the transition metal compound relative to the ethylene polymer composition is usually not more than 2 ppm, preferably not more than 1 ppm, more preferably not more than 0.5 ppm, and most preferably not more than 0.3 ppm. The total content of transition metals may be calculated by subjecting a sample to microwave decomposition in the presence of ultrapure nitric acid in a fluororesin container and analyzing the products by ICP mass spectrometry (ICP-MS).

The ethylene polymer composition in the invention may contain other polymers and additives such as colorants, stabilizers and nucleating agents as required while still achieving the object of the invention. Examples of such optional components include various known stabilizers such as heat stabilizers and weather stabilizers, antistatic agents, hydrophilic agents, water repellents, nucleating agents, slip agents, antiblocking agents, antifogging agents, lubricants, dyes, pigments, natural oils and synthetic oils.

Examples of the stabilizers include anti-aging agents such as 2,6-di-t-butyl-4-methyl-phenol (BHT); phenolic antioxidants such as tetrakis[methylene-3-(3,5-di-t-butyl-4-hydroxyphenyl) propionate]methane, alkyl β-(3,5-di-t-butyl-4-hydroxyphenyl) propionate esters, 2,2'-oxamidobis[ethyl-3-(3,5-di-t-butyl-4-hydroxyphenyl) propionate] and Irganox 1010 (product name; hindered phenolic antioxidant); fatty acid metal salts such as zinc stearate, calcium stearate and calcium 1,2-hydroxystearate; and polyhydric alcohol fatty acid esters such as glycerol monostearate, glycerol distearate, pentaerythritol monostearate, pentaerythritol distearate and pentaerythritol tristearate. Any combinations of these stabilizers may be used.

Further, the composition may contain fillers such as silicas, diatomaceous earths, aluminas, titanium oxides, magnesium oxides, pumice powders, pumice balloons, aluminum hydroxides, magnesium hydroxides, basic magnesium carbonates, dolomites, calcium sulfates, potassium titanates, barium sulfates, calcium sulfites, talcs, clays, micas, asbestos, calcium silicates, montmorillonites, bentonites, graphites, aluminum powders and molybdenum sulfides.

The ethylene polymer composition in the invention may be obtained by mixing the ethylene polymer (a), the ethylene polymer wax (b) and the optional components as required by any of various known methods.

### 〈Meltblown nonwoven fabrics (A)〉

The meltblown nonwoven fabric (A) that constitutes the nonwoven fabric laminate of the invention is obtained from the ethylene polymer composition described above. The average fiber diameter of the fibers forming the meltblown nonwoven fabric is usually not more than 10 µm. In order to ensure that the meltblown nonwoven fabric has low basis weight and higher barrier properties, the average fiber diameter is preferably in the range of 0.5 to 8 µm, more preferably 1 to 5 µm, still more preferably 1 to 4 µm, and particularly preferably 2 to 3.5 µm.

With the average fiber diameter in the above range, the obtainable meltblown nonwoven fabric has good uniformity and excellent barrier properties.

The meltblown nonwoven fabric (A) in the invention usually has a basis weight in the range of not less than 0.5 g/m², preferably 10 to 50 g/m², more preferably 15 to 45 g/m², and still more preferably 20 to 40 g/m². If the basis weight is excessively low, the water pressure resistance may be decreased and hence the obtainable nonwoven fabric laminate may exhibit poor barrier properties. The upper limit of the basis weight is not particularly limited, but an excessively high basis weight tends to deteriorate the flexibility of the obtainable nonwoven fabric laminate. In such applications as sanitary materials in which high barrier properties are of relatively low importance and the main requirements are flexibility, heat sealing properties and lightweight properties, the basis weight may be appropriately controlled in the range of 0.5 to 5 g/m², and more preferably 0.5 to 3 g/m².

### (Methods for producing meltblown nonwoven fabrics)

The meltblown nonwoven fabric (A) in the invention may be produced by meltblowing the ethylene polymer composition using a known production method. Specifically, for example, the meltblowing method may be such that the ethylene polymer composition is melt kneaded in a device such as an extruder and the melt is extruded through a spinneret having a spinning nozzle while the fibers are blown with a high-speed and high-temperature air stream ejected from the periphery of the spinneret and the self-adhesive microfibers are deposited to form a web with a prescribed thickness on a collector belt. The web may be subjected to an entanglement treatment as required.

For example, the deposited web may be entangled by using an appropriate method selected from various techniques such as hot embossing with an embossing roll, ultrasonic fusion bonding, water jet fiber entanglement, fusion bonding by the blowing of hot air through the fibers, and needle punching. In the production of the nonwoven fabric laminates of the invention, hot embossing is preferably adopted because of the simplicity of lamination.

### 〈Ethylene polymers (y)〉

The ethylene polymer (y), which is one of the components of the fibers forming the spunbond nonwoven fabric that constitutes the nonwoven fabric laminate of the invention, is a resin that is similar to the ethylene polymer (a). Specifically, the polymer may be an ethylene homopolymer or a copolymer of ethylene and another α-olefin, and is usually an ethylene-based polymer having a density in the range of 0.870 to 0.990 g/cm³, preferably 0.900 to 0.980 g/cm³, and more preferably 0.910 to 0.980 g/cm³.

The ethylene polymer (y) in the invention is usually any of crystalline resins which are produced and sold as various products such as high-pressure low-density polyethylenes, linear low-density polyethylenes (so-called LLDPE), medium-density polyethylenes and high-density polyethylenes.

Examples of the α-olefins to be copolymerized with ethylene include α-olefins having 3 to 20 carbon atoms such as propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. The ethylene polymers may be used singly, or a mixture of two or more polymers may be used.

The ethylene polymer (y) in the invention is not particularly limited as long as the polymer may form a spunbond nonwoven fabric. From the viewpoint of spinnability, however, it is desirable that the MFR (measured under 2.16 kg load at 190°C in accordance with ASTM D 1238) be usually in the range of 0.5 to 150 g/10 min, and preferably 10 to 150 g/10 min.

Similarly to the ethylene polymer (a), the ethylene polymer (y) in the invention may be any of polymers obtained by various known production methods such as high-pressure methods, and Ziegler-catalyzed or metallocene-catalyzed medium or low-pressure methods.

The ethylene polymer (y) in the invention may contain 0.1 to 0.5 wt% of a slip agent including a fatty acid amide such as oleamide, erucamide or stearamide. The addition of a slip agent to the ethylene polymer (y) further improves the fuzz resistance and the flexibility of the obtainable spunbond nonwoven fabric.

### 〈Polyesters (x)〉

The polyester (x), which is one of the components of the fibers forming the spunbond nonwoven fabric that constitutes the nonwoven fabric laminate of the invention, may be any of known polyesters used as raw materials of spunbond nonwoven fabrics. Specific examples include polyethylene terephthalates, polybutylene terephthalates, polytrimethylene terephthalates, and copolymers and terpolymers thereof.

The molecular weight of the polyester (x) in the invention is not particularly limited as long as the polyester can form a conjugate spunbond nonwoven fabric in combination with the ethylene polymer (y). Of the usual polyesters sold on the market or used in industry, in particular, those polyesters marketed and utilized for fiber production may be suitably used. Specifically, those polyesters having an intrinsic viscosity in the range of 0.50 to 1.20 are preferable.

Other polymers and additives may be added to the polyester (x) and/or the ethylene polymer (y) in the invention while still achieving the object of the invention, examples of the additives including colorants, various stabilizers such as heat stabilizers and weather stabilizers, antistatic agents, hydrophilic agents, water repellents, nucleating agents, slip agents, antiblocking agents, antifogging agents, lubricants, dyes, pigments, natural oils and synthetic oils.

### (Spunbond nonwoven fabrics)

The spunbond nonwoven fabric that constitutes the nonwoven fabric laminate of the invention includes fibers formed from the ethylene polymer (y), or from the ethylene polymer (y) and the polyester polymer (x).

In the case where the spunbond nonwoven fabric in the invention includes fibers formed from the ethylene polymer (y), the fibers may be formed from the ethylene polymer (y) alone (single fibers) or may be conjugate fibers in which the ethylene polymer (y) defines at least a portion of the surface of the fibers.

When the spunbond nonwoven fabric in the invention is formed of fibers of the ethylene polymer (y) alone (single fibers), the obtainable nonwoven fabric laminate exhibits high flexibility.

From the viewpoints of the flexibility and the strength of the obtainable nonwoven fabric laminate, it is preferable that the spunbond nonwoven fabric in the invention be formed of conjugate fibers which include the polyester (x) and the ethylene polymer (y) and in which the ethylene polymer (y) defines at least a portion of the surface of the fibers.

The basis weight of the spunbond nonwoven fabric in the invention is usually in the range of 5 to 50 g/m², and preferably 10 to 25 g/m².

The fibers forming the spunbond nonwoven fabric in the invention usually have an average fiber diameter in the range of 5 to 30 µm (approximately 0.2 to 7 d), and preferably 10 to 20 µm.

### (Conjugate fibers)

The shape of the conjugate fibers forming the spunbond nonwoven fabric in the invention is not particularly limited as long as the ethylene polymer (y) is exposed on a portion of the surface of the conjugate fibers. The ethylene polymer (y) exposed on a portion of the surface of the conjugate fibers ensures excellent adhesion with respect to the meltblown nonwoven fabric (A).

More preferred conjugate fibers are such that the weight ratio [(x)/(y)] of the polyester (x) to the ethylene polymer (y) is in the range of 5/95 to 95/5, and particularly 20/80 to 80/20 as measured across the cross section of the conjugate fibers. With the ratio of the polyester polymer (x) to the ethylene polymer (y) in this range, the obtainable spunbond nonwoven fabric advantageously has an excellent balance between strength and flexibility.

The conjugate fibers in the invention are preferably concentric or eccentric sheath-core conjugate fibers having the core including the polyester polymer (x) and the sheath including the ethylene polymer (y), or side-by-side conjugate fibers formed of the polyester polymer (x) and the ethylene polymer (y).

### (Methods for producing spunbond nonwoven fabrics)

The spunbond nonwoven fabric in the invention may be produced by a known spunbonding method. Specifically, for example, the ethylene copolymer (y) alone may be melt spun to form a spunbond nonwoven fabric. Alternatively, the polyester (x) and the ethylene copolymer (y) may form conjugate fibers in such a manner that the polyester (x) and the ethylene copolymer (y) with a desired ratio are melted in respective devices such as extruders, the melts are then spun through a spinneret having a spinning nozzle configured to extrude the melts into a desired conjugate structure, and the resultant continuous fiber filaments are cooled with a cooling fluid and attenuated with drawing air to a desired fineness. The filaments that have been spun are thereafter collected and deposited onto a collector belt in a desired thickness and are entangled to form a spunbond nonwoven fabric. Examples of the entanglement treatments include those described for the meltblown nonwoven fabrics. In particular, hot embossing is preferable. In the hot embossing treatment, the emboss area ratio may be determined appropriately but is preferably 5 to 35%.

### 〈Nonwoven fabric laminates〉

The nonwoven fabric laminate of the invention includes the meltblown nonwoven fabric (A) and the spunbond nonwoven fabric formed of the above-described fibers that is stacked on at least one surface of the meltblown nonwoven fabric.

As a result of the stacking of the meltblown nonwoven fabric (A) and the spunbond nonwoven fabric formed of the above-described fibers, the nonwoven fabric laminate of the invention achieves excellent flexibility, barrier properties (high waterproofness), strength, durability, uniformity, fabric appearance and texture.

The nonwoven fabric laminate of the invention is not particularly limited as long as the surface layer on at least one side is formed of the spunbond nonwoven fabric. Preferred layer structures are spunbond nonwoven fabric layer/meltblown nonwoven fabric (A) layer, and spunbond nonwoven fabric layer/meltblown nonwoven fabric (A) layer/spunbond nonwoven fabric layer.

The basis weight of the nonwoven fabric laminate of the invention may be selected appropriately in accordance with factors such as the purpose of use of the nonwoven fabric laminate, the quality required and economic efficiency, but is usually in the range of 6 to 150 g/m², more preferably 11 to 120 g/m², still more preferably 15 to 100 g/m², and most preferably 15 to 70 g/m².

The nonwoven fabric laminate of the invention is such that the spunbond nonwoven fabric formed of the above-described fibers is stacked on at least one surface of the meltblown nonwoven fabric (A), and each of the nonwoven fabrics contains an ethylene polymer. These configurations ensure that the meltblown nonwoven fabric (A) and the spunbond nonwoven fabric may be easily joined together by a treatment such as hot embossing, and the thus-obtained nonwoven fabric laminate has excellent interlayer bond strength.

The nonwoven fabric laminates of the invention are excellently stable to electron beams or gamma rays applied during disinfection or sterilization.

The nonwoven fabric laminates of the invention have good uniformity and are excellent in breathability, barrier properties and flexibility. In addition, the spunbond nonwoven fabric layers as the surface layers on one or both sides provide excellent strength, durability, wear resistance and fuzz resistance.

In the nonwoven fabric laminates of the invention, the cantilever value as an indicator of flexibility is usually not more than 100 mm, preferably not more than 90 mm, and more preferably not more than 80 mm, and the water pressure resistance is usually not less than 350 mmAq, preferably not less than 500 mmAq, more preferably not less than 600 mmAq, and most preferably not less than 650 mmAq.

The nonwoven fabric laminates of the invention may be rendered water-repellent as required. The water repellent treatment may be performed by applying a water repellent such as a fluorine water repellent or by admixing a water repellent as an additive to the resin raw materials before the formation of the nonwoven fabrics. The ratio of the water repellent attached (added) is appropriately 0.5 to 5.0 wt%. For example, alcohol repellency may be imparted by attaching a fluorine agent to the nonwoven fabric (b) with a ratio of 0.01 to 3 wt%. In this case, the agent may be attached and dried by any methods without limitation. Examples of the agent application methods include spraying, soaking the nonwoven fabrics into a bath of the agent followed by squeezing of the agent with a mangle, and coating. Examples of the drying methods include the use of a hot air dryer or a tenter, and contact with a heating element.

Through such a treatment, the nonwoven fabric laminates become resistant to the penetration of water or alcohol and may be used in medical gowns or the like while ensuring high barrier properties even in the case of alcohol sterilization.

Further, antistatic properties may be imparted to the nonwoven fabric laminates of the invention. For example, antistatic properties may be imparted by applying an appropriate antistatic agent such as a fatty acid ester or a quaternary ammonium salt or by admixing such an antistatic agent as an additive to the resin raw materials before the formation of the nonwoven fabrics. The level of antistatic properties is preferably such that the charged electrostatic potential is not more than 1000 V as tested by the JIS L1094 method C at 20°C and 40% RH (the friction cloth is cotton cloth).

Through such a treatment, the nonwoven fabric laminates used in medical gowns or the like may achieve enhanced wear comfort.

While still achieving the object of the invention, additional nonwoven fabrics formed of discontinuous or continuous fibers such as cotton, cupra, rayon, polyolefin fibers, polyamide fibers and polyester fibers may be stacked onto the nonwoven fabric laminates of the invention.

The nonwoven fabric laminates of the invention may be applied to all ranges of sanitary materials, living materials, industrial materials and medical materials. In particular, the nonwoven fabric laminates may be suitably used as materials for products such as disposable diapers, sanitary napkins, bases of poultice pads or the like, and bed covers because of their excellent flexibility, breathability and barrier properties. In addition, the polyethylene-based and polyester-based structures are stable to electron beams or gamma rays applied during disinfection or sterilization, and are therefore particularly suited for use as materials for products such as gowns, caps, masks and drapes in facilities such as hospitals. Further, the nonwoven fabric laminates have good post-processability such as heat sealing properties and hence may be applied to all ranges of living materials such as deoxidizers, disposable warmers, hot poultice pads, masks, CD (compact disk) bags, food packages and garment covers. For similar reasons, the nonwoven fabric laminates may be suitably used also as automobile interior materials and various backing materials. Further, the fact that the nonwoven fabric laminates are composed of thin fibers makes it possible for the nonwoven fabric laminates to be applied widely to liquid filter or air filter materials.

### 〈Methods for producing nonwoven fabric laminates〉

The nonwoven fabric laminates of the invention may be produced by any methods without limitation as long as the meltblown nonwoven fabrics (A) and the spunbond nonwoven fabrics may be joined together into laminates.

Specific examples of the production methods include, but are not limited to, the following:
(i) The ethylene polymer composition is melt blown and the fibers are deposited to form a meltblown nonwoven fabric (A) directly on a previously obtained spunbond nonwoven fabric. Thereafter, the spunbond nonwoven fabric and the meltblown nonwoven fabric are fusion bonded to each other by a treatment such as hot embossing to form a two-layer laminate.
(ii) The ethylene polymer composition is melt blown and the fibers are deposited to form a meltblown nonwoven fabric (A) directly on a previously obtained spunbond nonwoven fabric. Further, fibers are deposited by a spunbonding method to form a spunbond nonwoven fabric directly onto the meltblown nonwoven fabric (A). Thereafter, the spunbond nonwoven fabric, the meltblown nonwoven fabric (A) and the spunbond nonwoven fabric are fusion bonded together to form a three-layer laminate.
(iii) A previously obtained spunbond nonwoven fabric and a separately produced meltblown nonwoven fabric (A) are stacked one on top of the other, and the nonwoven fabrics are fusion bonded to each other by hot pressing to form a laminate.
(iv) A previously obtained spunbond nonwoven fabric and a separately produced meltblown nonwoven fabric (A) are bonded to each other via an adhesive such as a hot melt adhesive or a solvent-based adhesive to form a laminate.

The nonwoven fabric laminate of the invention may be such that the entirety of the contacting surfaces of the meltblown nonwoven fabric (A) and the spunbond nonwoven fabric is fusion bonded, or may be such that part of the contacting surfaces is fusion bonded. Preferably, part of the contacting surfaces of the nonwoven fabric layers is fusion bonded by hot embossing. In this case, the fusion bonding area (emboss area ratio: corresponding to the area of the marks on the emboss roll) is preferably 5 to 35%, and more preferably 10 to 30% of the contact area. With the fusion bonding area in this range, the nonwoven fabric laminates achieve an excellent balance between bond strength and flexibility. To ensure that the obtainable nonwoven fabric laminates maintain high waterproofness, the stacking is most preferably performed by hot embossing. If the fusion bonding area is less than 5%, the obtainable nonwoven fabric laminates may exhibit poor fuzz resistance. If the ratio exceeds 35%, the obtainable nonwoven fabric laminates may be poor in flexibility. The hot embossing may be performed generally at an embossing temperature in the range of 85 to 120°C, although variable depending on the line speed and the bonding pressure during the embossing. Embossing at less than 85°C may result in poor fuzz resistance of the obtainable nonwoven fabric laminates. If the embossing temperature exceeds 120°C, the obtainable nonwoven fabric laminates may exhibit poor flexibility, or the nonwoven fabric laminates may be damaged by the heat and consequently waterproofness may be deteriorated.

Bonding with adhesives is another method for bonding the spunbond nonwoven fabric and the meltblown nonwoven fabric (A) by other than the fusion bonding of the nonwoven fabrics. Examples of the hot melt adhesives used in this method include resin adhesives such as vinyl acetate adhesives and polyvinyl alcohol adhesives, and rubber adhesives such as styrene-butadiene adhesives and styrene-isoprene adhesives. Examples of the solvent-based adhesives include organic solvent-based or aqueous emulsions of rubber adhesives such as styrene-butadiene adhesives, styrene-isoprene adhesives and urethane adhesives, and resin adhesives such as vinyl acetate adhesives and vinyl chloride adhesives. Of these adhesives, hot melt rubber adhesives such as styrene-isoprene adhesives and styrene-butadiene adhesives are preferable in that the characteristic texture of the spunbond nonwoven fabrics is not impaired.

### EXAMPLES

Hereinbelow, the present invention will be described in greater detail by presenting Examples of the invention and Comparative Examples. In Examples and Comparative Examples, properties of meltblown nonwoven fabrics, spunbond nonwoven fabrics and nonwoven fabric laminates were measured by the following methods.

### (1) Average fiber diameter

A sample piece sampled from a nonwoven fabric was observed on a scanning electron microscope with 1000x magnification. The fiber diameters (µm) of 30 fibers were measured and the results were averaged.

### (2) Basis weight

The basis weight was measured in accordance with "Mass per unit area in standard condition" described in JIS L 1096-1990, Section 6.4.2. Circular test pieces having an area of 100 cm² were sampled from a nonwoven fabric. The sampling took place randomly in the machine direction (MD), and at 20 locations at regular intervals on a straight line except for 20 cm-wide ends on both sides of the nonwoven fabric sample in the cross direction (CD) perpendicular to the machine direction. Each of the test pieces that had been sampled was weighed on an electronic scale balance (EB-330 manufactured by Shimadzu Corporation) to obtain the mass (g), and the average mass (g) of the test pieces was calculated. The average value was converted into a mass (g) per 1 m² and was rounded off to one decimal place, thereby determining the basis weight (g/m²) of the nonwoven fabric sample.

### (3) Evaluation of tensile strength

Test pieces 25 mm in width × 250 mm in length were sampled from a nonwoven fabric laminate and were subjected to a tensile test in which they were stretched in two directions, namely, in the machine direction (MD) and in the cross direction (CD) perpendicular to the machine direction, under conditions of 50 mm chuck distance and 100 mm/min stress rate. The maximum tensile load was obtained as the tensile strength (N/25 mm). The measurement was performed 5 times, and the average of the 5 values was determined.

### (4) Waterproofness (barrier properties)

As an indicator of waterproofness (barrier properties), the water pressure resistance of a nonwoven fabric laminate was measured in accordance with the method A (low-water pressure method) specified in JIS L 1096.

### (5) Measurement of cantilever value (flexural rigidity)

In accordance with JIS L 1096 (Section 6.19.1, Method A), a nonwoven fabric laminate was cut in a thermostatic chamber at a temperature of 20±2°C and a humidity of 65±2% in accordance with JIS Z 8703 (standard conditions at testing sites) to give five test pieces 20 mm in width × 150 mm in length, in the machine direction (MD). Each test piece was placed on a smooth-surface horizontal table having a 45° slope surface, with a shorter side of the test piece aligned at the scale baseline. Next, the test piece was manually slid slowly toward the slope surface. When the central point at one end of the test piece touched the slope surface, the length by which the other end had moved was measured by reading the scales. The flexibility (flexural rigidity) was indicated in length (mm) of the movement of the test piece. Each of the five test pieces was tested with respect to both the front and back sides, the results being averaged. In the measurement by this so-called 45° cantilever method, nonwoven fabrics are evaluated as having higher flexibility as the flexural rigidity is lower. In garment applications, the flexibility is evaluated as good when the value of flexural rigidity is 100 mm or less. However, the requirement of flexibility is variable depending on factors such as the purpose of use, and thus the flexural rigidity is not necessarily limited to the above values.

### (6) Evaluation of fuzz resistance

Forty test pieces 300 mm (machine direction: MD) × 25 mm (cross direction: CD) were sampled from a nonwoven fabric laminate and were tested using "Rubbing Tester II (Gakushin Type)" described in JIS L 0849-2004, 5.5.1.b. Specifically, the tester was RT-100 manufactured by DAIEI KAGAKU SEIKI MFG. CO., LTD., the rubbing pin load was 200 g, and packaging pressure-sensitive adhesive tape (cloth) No. 314 (manufactured by Rinrei Tape Co. , Ltd.) was arranged such that the non-sticky surface of the pressure-sensitive adhesive tape would rub the testing surface of the test piece. To prevent the misalignment of the test piece during the measurement, abrasive paper "No. 400" was attached on the table of the tester with the abrasive surface upward. The test piece was placed on the abrasive surface with the evaluation surface facing upward and was attached to the table of the measurement apparatus. After the attachment of the test piece, the testing surface of the test piece and the non-sticky surface of the pressure-sensitive adhesive tape were rubbed against each other 50 times back and forth. The rubbed surface of the test piece was observed, and the fuzz resistance was rated based on the following criteria.
1 Point: There was no fuzz.
2 Points: The test piece had been fuzzed to such an extent that a small fuzzball had almost formed at one location.
3 Points: A clear fuzzball had almost formed, or there were several small fuzzballs.
4 Points: A large and clear fuzzball had formed, and the fibers had been lifted at several locations.
5 Points: The fibers had been removed so heavily and the test piece had become thin.
6 Points: The fibers had been removed so heavily that the test piece had been broken.

### (Example 1)

### (Production of meltblown nonwoven fabric)

A mixture was provided which contained 50 parts by weight of a metallocene-catalyzed ethylene·1-hexene copolymer [product name: EVOLUE H SP50800P manufactured by Prime Polymer Co., Ltd., density: 0.951 g/cm³, MFR: 135 g/10 min] and 50 parts by weight of a metallocene-catalyzed ethylene polymer wax [product name: EXCEREX 10500 manufactured by Mitsui Chemicals, Inc., density: 0.960 g/cm³, weight average molecular weight: 1,300, softening point: 119°C]. By using the mixture, the molten resin was extruded through a spinneret which had a nozzle having 360 pores with a diameter of 0.4 mm at a rate of 0.7 g/min per pore, and was melt spun by a melt blowing method. The resultant microfibers were deposited onto a collection surface to form a meltblown nonwoven fabric (MB) having a basis weight of 30 g/m².

### 〈Production of spunbond nonwoven fabric〉

An ethylene·1-butene copolymer [product name: NEO-ZEX NZ50301 manufactured by Prime Polymer Co., Ltd. , density: 0.950 g/cm³, MFR (measured at 190°C under 2.16 kg load in accordance with ASTM D 1238) : 30 g/10 min] was used as an ethylene copolymer for forming a sheath. A polyethylene terephthalate [product name: J125 manufactured by Mitsui Chemicals, Inc.] was used as a polyester polymer for forming a core. These polymers were extruded under spinning conditions in which the output per pore was 0.5 g/min/pore and the resin temperature was 270°C. The fibers were cooled, drawn to a filament fineness of 2 d, and collected into a web, which was then hot embossed. As a result, a spunbond nonwoven fabric (SB) was obtained which was composed of concentric sheath-core conjugate fibers (PE·PET conjugate fibers) with a core proportion of 50 wt% (core:sheath weight ratio = 50:50). The basis weight was 15 g/m².

### 〈Production of nonwoven fabric laminate〉

The spunbond nonwoven fabrics were stacked onto both surfaces of the meltblown nonwoven fabric. The nonwoven fabrics were fusion bonded together by hot embossing (emboss area ratio: 18%) at 90°C and a linear pressure of 60 kg/cm, thereby producing a three-layer nonwoven fabric laminate. The properties of the nonwoven fabric laminate were measured by the aforementioned methods. The results are described in Table 1.

### (Example 2)

A three-layer nonwoven fabric laminate was obtained by the same production method as in Example 1, except that the ethylene polymer wax used in the meltblown nonwoven fabric in Example 1 was replaced by a metallocene-catalyzed ethylene polymer wax [product name: EXCEREX 20700 manufactured by Mitsui Chemicals, Inc., density: 0.970 g/cm³, weight average molecular weight: 3,200, softening point: 124°C]. The properties of the nonwoven fabric laminate were measured by the aforementioned methods. The results are described in Table 1.

### (Example 3)

A three-layer nonwoven fabric laminate was obtained by the same production method as in Example 1, except that the ethylene polymer wax used in the meltblown nonwoven fabric in Example 1 was replaced by a Ziegler-catalyzed ethylene polymer wax [product name: HI-WAX 100P manufactured by Mitsui Chemicals, Inc., density: 0.950 g/cm³, weight average molecular weight: 1,100, softening point: 116°C]. The properties of the nonwoven fabric laminate were measured by the aforementioned methods. The results are described in Table 1.

### (Comparative Example 1)

A three-layer nonwoven fabric laminate was obtained by the same production method as in Example 1, except that the ethylene polymer wax used in the meltblown nonwoven fabric in Example 1 was replaced by a metallocene-catalyzed ethylene polymer wax [product name: EXCEREX 30200B manufactured by Mitsui Chemicals, Inc., density: 0.915 g/cm³, weight average molecular weight: 5,100, softening point: 102°C]. The properties of the nonwoven fabric laminate were measured by the aforementioned methods. The results are described in Table 1.

### (Comparative Example 2)

A three-layer nonwoven fabric laminate was obtained by the same production method as in Example 1, except that the ethylene polymer wax used in the meltblown nonwoven fabric in Example 1 was replaced by a Ziegler-catalyzed ethylene polymer wax [product name: HI-WAX 110P manufactured by Mitsui Chemicals, Inc., density: 0.920 g/cm³, weight average molecular weight: 1,200, softening point: 109°C]. The properties of the nonwoven fabric laminate were measured by the aforementioned methods. The results are described in Table 1.

### (Comparative Example 3)

A three-layer nonwoven fabric laminate was obtained by the same production method as in Example 1, except that the ethylene polymer wax used in the meltblown nonwoven fabric in Example 1 was replaced by a Ziegler-catalyzed ethylene polymer wax [product name: HI-WAX 220P manufactured by Mitsui Chemicals, Inc., density: 0.920 g/cm³, weight average molecular weight: 3,000, softening point: 110°C]. The properties of the nonwoven fabric laminate were measured by the aforementioned methods. The results are described in Table 1.

### (Comparative Example 4)

A three-layer nonwoven fabric laminate was obtained by the same production method as in Example 1, except that the ethylene polymer wax used in the meltblown nonwoven fabric in Example 1 was replaced by a Ziegler-catalyzed ethylene polymer wax [product name: HI-WAX 800P manufactured by Mitsui Chemicals, Inc., density: 0.970 g/cm³, weight average molecular weight: 12,700, softening point: 127°C]. The properties of the nonwoven fabric laminate were measured by the aforementioned methods. The results are described in Table 1.

### (Comparative Example 5)

A three-layer nonwoven fabric laminate was obtained by the same production method as in Example 1, except that the ethylene polymer wax used in the meltblown nonwoven fabric in Example 1 was replaced by a Ziegler-catalyzed ethylene polymer wax [product name: HI-WAX 400P manufactured by Mitsui Chemicals, Inc., density: 0.980 g/cm³, weight average molecular weight: 6, 800, softening point: 126°C]. The properties of the nonwoven fabric laminate were measured by the aforementioned methods. The results are described in Table 1.

### (Comparative Example 6)

A three-layer nonwoven fabric laminate was obtained by the same production method as in Example 1, except that the ethylene polymer wax used in the meltblown nonwoven fabric in Example 1 was replaced by a metallocene-catalyzed ethylene polymer wax [product name: EXCEREX 40800 manufactured by Mitsui Chemicals, Inc., density: 0.980 g/cm³, weight average molecular weight: 6, 900, softening point: 128°C]. The properties of the nonwoven fabric laminate were measured by the aforementioned methods. The results are described in Table 1.

### [Table 1]

**Table 1**

| | | | | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|
| MB | Ethylene polymer (a) | Polymerization catalyst | | Metallocene | Metallocene | Metallocene | Metallocene | Metallocene | Metallocene | Metallocene | Metallocene | Metallocene |
| | | Density (g/cm³) | | 0.951 | 0.951 | 0.951 | 0.951 | 0.951 | 0.951 | 0.951 | 0.951 | 0.951 |
| | | MFR (g/10 min) | | 135 | 135 | 135 | 135 | 135 | 135 | 135 | 135 | 135 |
| | Ethylene polymer wax (b) | Polymerization catalyst | | Metallocene | Metallocene | Ziegler | Metallocene | Ziegler | Ziegler | Ziegler | Ziegler | Metallocene |
| | | Density (g/cm³) | | 0.960 | 0.970 | 0.950 | 0.915 | 0.920 | 0.920 | 0.970 | 0.980 | 0.980 |
| | | Weight average Weight average Mw molecular weight | | 1,300 Mw | 3,200 | 1,100 | 5,100 | 1,200 | 3,000 | 12,700 | 6,800 | 6,900 |
| | | Softening point (°C) | | 119°C | 124°C | 116°C | 102°C | 109°C | 110°C | 127°C | 126°C | 128°C |
| | Weight ratio (a)/(b) | | | 50/50 | 50/50 | 50/50 | 50/50 | 50/50 | 50/50 | 50/50 | 50/50 | 50/50 |
| | Half crystallization time | | s | >150 | >150 | >150 | >150 | >150 | >150 | 83 | 85 | 106 |
| | Average fiber diameter | | µm | 3.1 | 3.2 | 3.1 | 3.3 | 3.1 | 3.2 | 4.3 | 3.8 | 3.7 |
| SB | Spunbond nonwoven fabric (SB) | | | PE·PET | PE·PET | PE·PET | PE·PET | PE·PET | PE·PET | PE·PET | PE·PET | PE·PET |
| | | | | conjugate | conjugate | conjugate | conjugate | conjugate | conjugate | conjugate | conjugate | conjugate |
| SB/MB /SB | Basis weight configuration (SB/MB/SB) | | g/m² | 15/30/15 | 15/30/15 | 15/30/15 | 15/30/15 | 15/30/15 | 15/30/15 | 15/30/15 | 15/30/15 | 15/30/15 |
| | Tensile strength MD/CD | | N/25 mm | 72/26 | 65/31 | 66/24 | 61/23 | 53/20 | 49/20 | 46/33 | 54/25 | 64/33 |
| | Barrier properties | | mmAq | 866 | 752 | 704 | 246 | 399 | 470 | 356 | 550 | 616 |
| | Cantilever values MD/CD | | mm | 70/42 | 67/50 | 75/42 | 69/49 | 65/40 | 65/38 | 66/45 | 63/44 | 70/49 |
| | Fuzz resistance | | | 1 | 1 | 1 | 1 | 1 | 1 | 1 | 1 | 1 |

### INDUSTRIAL APPLICABILITY

The nonwoven fabric laminates of the invention may be applied to all ranges of sanitary materials, living materials, industrial materials and medical materials. In particular, the nonwoven fabric laminates may be used in various garment applications because of their excellent flexibility, breathability and barrier properties. For example, the nonwoven fabric laminates may be suitably used as materials for products such as disposable diapers, sanitary napkins, bases of poultice pads or the like, and bed covers. The nonwoven fabric laminates may be disinfected or sterilized by treatments such as electron beam or gamma ray treatments. In particular, the nonwoven fabric laminates are stable to electron beams or gamma rays applied during disinfection or sterilization, and are therefore particularly suited for use as materials for products such as gowns, caps, drapes, masks, gauzes and various protective garments. Further, the nonwoven fabric laminates have good post-processability such as heat sealing properties and hence may be applied to all ranges of living materials such as deoxidizers, disposable warmers, hot poultice pads, masks, packages for various powders, semisolids, gels and liquids, CD (compact disk) bags, food packages and garment covers. For similar reasons, the nonwoven fabric laminates may be suitably used also as automobile interior materials and various backing materials. Further, the fact that the nonwoven fabric laminates are composed of thin fibers makes it possible for the nonwoven fabric laminates to be applied widely to liquid filter or air filter materials.

## Claims

1. A nonwoven fabric laminate comprising a meltblown nonwoven fabric (A) and a spunbond nonwoven fabric stacked on at least one surface of the meltblown nonwoven fabric, the meltblown nonwoven fabric including a fiber of an ethylene polymer composition containing an ethylene polymer (a) and an ethylene polymer wax (b) having a softening point exceeding 110°C, the spunbond nonwoven fabric including a fiber formed from an ethylene polymer (y), or from an ethylene polymer (y) and a polyester polymer (x), **characterized in that** the ethylene polymer wax (b) has a weight average molecular weight of 1,000 to less than 6,000.

2. The nonwoven fabric laminate according to claim 1, wherein the ethylene polymer composition includes the ethylene polymer (a) and the ethylene polymer wax (b) in a weight ratio (a)/(b) of 80/20 to 20/80.

3. The nonwoven fabric laminate according to claim 1, wherein the half crystallization time of the ethylene polymer composition is not less than 87 seconds.

4. The nonwoven fabric laminate according to claim 1, wherein the ethylene polymer composition includes a transition metal compound.

5. The nonwoven fabric laminate according to claim 1, wherein the ethylene polymer (a) includes a metallocene-catalyzed ethylene polymer.

6. The nonwoven fabric laminate according to claim 1, wherein the ethylene polymer (a) has a melt flow rate of 50 to 150 g/10 min.

7. The nonwoven fabric laminate according to claim 1, wherein the fiber forming the spunbond nonwoven fabric is a sheath-core conjugate fiber having the core including the polyester (x) and the sheath including the ethylene polymer (y), or a side-by-side conjugate fiber formed of the polyester (x) and the ethylene polymer (y).

8. The nonwoven fabric laminate according to claim 1, wherein the meltblown nonwoven fabric (A) has a basis weight in the range of 10 to 50 g/m².

9. The nonwoven fabric laminate according to claim 1, wherein the fibers forming the meltblown nonwoven fabric (A) have an average fiber diameter in the range of 0.5 to 3.5 µm.

10. The nonwoven fabric laminate according to claim 1, wherein the nonwoven fabric laminate has a water pressure resistance of not less than 650 mmAq.

11. The nonwoven fabric laminate according to claim 1, wherein the nonwoven fabric laminate is a fusion bonded laminate.

12. The nonwoven fabric laminate according to claim 1, wherein the nonwoven fabric laminate has a basis weight in the range of 15 to 70 g/m².

13. A medical nonwoven fabric laminate comprising the nonwoven fabric laminate described in any one of claims 1 to 12.

14. A medical garment comprising the nonwoven fabric laminate described in any one of claims 1 to 12.

15. A drape comprising the nonwoven fabric laminate described in any one of claims 1 to 12.

## Patentansprüche

1. Vliesstofflaminat, umfassend einen schmelzgeblasenen Vliesstoff (A) und einen Spinnvliesstoff, der auf mindestens einer Oberfläche des schmelzgeblasenen Vliesstoffs gestapelt ist,
wobei der schmelzgeblasene Vliesstoff eine Faser aus einer Ethylenpolymerzusammensetzung enthält, die ein Ethylenpolymer (a) und ein Ethylenpolymerwachs (b) mit einem Erweichungspunkt von mehr als 110°C enthält,
wobei der Spinnvliesstoff eine Faser enthält, die aus einem Ethylenpolymer (y) oder aus einem Ethylenpolymer (y) und einem Polyesterpolymer (x) gebildet ist,
**dadurch gekennzeichnet, dass**
das Ethylenpolymerwachs (b) ein gewichtsgemitteltes Molekulargewicht von 1.000 bis weniger als 6.000 aufweist.

2. Vliesstofflaminat gemäß Anspruch 1, wobei die Ethylenpolymerzusammensetzung das Ethylenpolymer (a) und das Ethylenpolymerwachs (b) in einem Gewichtsverhältnis (a)/(b) von 80/20 bis 20/80 enthält.

3. Vliesstofflaminat gemäß Anspruch 1, wobei die Halbkristallisationszeit der Ethylenpolymerzusammensetzung nicht weniger als 87 Sekunden beträgt.

4. Vliesstofflaminat gemäß Anspruch 1, wobei die Ethylenpolymerzusammensetzung eine Übergangsmetallverbindung enthält.

5. Vliesstofflaminat gemäß Anspruch 1, wobei das Ethylenpolymer (a) ein Metallocen-katalysiertes Ethylenpolymer enthält.

6. Vliesstofflaminat gemäß Anspruch 1, wobei das Ethylenpolymer (a) eine Schmelzflussrate von 50 bis 150 g/10 min aufweist.

7. Vliesstofflaminat gemäß Anspruch 1, wobei die den Spinnvliesstoff bildende Faser eine Mantel-Kern-Konjugatfaser, bei der der Kern den Polyester (x) enthält und die Hülle das Ethylenpolymer (y) enthält, oder eine Konjugatfaser vom Seite-an-Seite-Typ, gebildet aus dem Polyester (x) und dem Ethylenpolymer (y), ist.

8. Vliesstofflaminat gemäß Anspruch 1, wobei der schmelzgeblasene Vliesstoff (A) ein Flächengewicht im Bereich von 10 bis 50 g/m² aufweist.

9. Vliesstofflaminat gemäß Anspruch 1, wobei die den schmelzgeblasenen Vliesstoff (A) bildenden Fasern einen durchschnittlichen Faserdurchmesser im Bereich von 0,5 bis 3,5 µm aufweisen.

10. Vliesstofflaminat gemäß Anspruch 1, wobei das Vliesstofflaminat eine Wasserdruckbeständigkeit von nicht weniger als 650 mmAq aufweist.

11. Vliesstofflaminat gemäß Anspruch 1, wobei das Vliesstofflaminat ein schmelzgebundenes Laminat ist.

12. Vliesstofflaminat gemäß Anspruch 1, wobei das Vliesstofflaminat ein Flächengewicht im Bereich von 15 bis 70 g/m² aufweist.

13. Medizinisches Vliesstofflaminat, umfassend das in einem der Ansprüche 1 bis 12 beschriebene Vliesstofflaminat.

14. Medizinisches Kleidungsstück, umfassend das in einem der Ansprüche 1 bis 12 beschriebene Vliesstofflaminat.

15. Tuch, umfassend das in einem der Ansprüche 1 bis 12 beschriebene Vliesstofflaminat.

## Revendications

1. Stratifié de tissus non tissés comprenant un tissu non tissé soufflé en fusion (A) et un tissu non tissé filé-lié empilé sur au moins une surface du tissu non tissé soufflé en fusion, le tissu non tissu soufflé en fusion comprenant une fibre d'une composition de polymère d'éthylène contenant un polymère d'éthylène (a) et une cire de polymère d'éthylène (b) ayant un point de ramollissement dépassant 110 °C, le tissu non tissé filé-lié comprenant une fibre formée d'un polymère d'éthylène (y) ou d'un polymère d'éthylène (y) et d'un polymère de polyester (x), **caractérisé en ce que** la cire de polymère d'éthylène (b) a un poids moléculaire moyen en poids de 1 000 à moins de 6 000.

2. Stratifié de tissus non tissés selon la revendication 1, dans lequel la composition de polymère d'éthylène comprend le polymère d'éthylène (a) et la cire de polymère d'éthylène (b) dans un rapport pondéral (a)/(b) de 80/20 à 20/80.

3. Stratifié de tissus non tissés selon la revendication 1, dans lequel le temps de demi-cristallisation de la composition de polymère d'éthylène n'est pas inférieur à 87 secondes.

4. Stratifié de tissus non tissés selon la revendication 1, dans lequel la composition de polymère d'éthylène comprend un composant de métal de transition.

5. Stratifié de tissus non tissés selon la revendication 1, dans lequel le polymère d'éthylène (a) comprend un polymère d'éthylène catalysé au métallocène.

6. Stratifié de tissus non tissés selon la revendication 1, dans lequel le polymère d'éthylène (a) a une vitesse d'écoulement à l'état fondu de 50 à 150 g/10 min.

7. Stratifié de tissus non tissés selon la revendication 1, dans lequel la fibre formant le tissu non tissé filé-lié est une fibre conjuguée gaine-âme ayant l'âme comprenant le polyester (x) et la gaine comprenant le polymère d'éthylène (y), ou une fibre conjuguée côte à côte formée du polyester (x) et du polymère d'éthylène (y).

8. Stratifié de tissus non tissés selon la revendication 1, dans lequel le tissu non tissé soufflé en fusion (A) a un poids de base dans la plage de 10 à 50 g/m².

9. Stratifié de tissus non tissés selon la revendication 1, dans lequel les fibres formant le tissu non tissé soufflé en fusion (A) ont un diamètre de fibre moyen dans la plage de 0,5 à 3,5 µm.

10. Stratifié de tissus non tissés selon la revendication 1, dans lequel le stratifié de tissus non tissés a une résistance à la pression de l'eau de pas moins de 650 mmAq.

11. Stratifié de tissus non tissés selon la revendication 1, dans lequel le stratifié de tissus non tissés est un stratifié lié par fusion.

12. Stratifié de tissus non tissés selon la revendication 1, dans lequel le stratifié de tissus non tissés a un poids de base dans la plage de 15 à 70 g/m².

13. Stratifié de tissus non tissés médical comprenant le stratifié de tissus non tissés décrit dans l'une quelconque des revendications 1 à 12.

14. Vêtement médical comprenant le stratifié de tissus non tissés décrit dans l'une quelconque des revendications 1 à 12.

15. Champ comprenant le stratifié de tissus non tissés décrit dans l'une quelconque des revendications 1 à 12.
